# EUROPEAN PATENT APPLICATION

(11) **EP 2 116 744 A1**
(43) Date of publication of application: **11.11.2009**
(21) Application number: 08425322.8
(22) Date of filing: 09.05.2008
(51) Int. Cl.: F16H 59/70, F16H 59/68, G01D 5/06

(54) **Servo-assisted transmission with contactless position sensors**

(71) Applicant: Magneti Marelli Powertrain S.p.A., 28011 Corbetta (IT)
(72) Inventor: Baldassari, Andrea, 40132 Bologna (IT); Piciotti, Roberto, 40139 Bologna (IT); Toselli, Fabio, 40139 Bologna (IT); Di Meo, Alfonso, 70033 Corato (IT); Bellato, Nazario, 40131 Bologna (IT)
(74) Representative: Bergadano, Mirko

(57) **Abstract**

A servo-assisted transmission (1) provided with: at least one servo-assisted clutch (6); a servo-assisted gearbox (4); a clutch servo-control (20) provided with an actuator (21) for driving the servo-assisted clutch (6); a gearbox servo-control (13) provided with at least one actuator (18; 19) for driving the servo-assisted gearbox (4); a housing box (26); and at least one position sensor (23; 24; 28) for detecting the position of a movable part (31) arranged inside the housing box (26); the position sensor (23; 24; 28) consists of: a permanent magnet (30), which is fixed onto the movable part (31), arranged within the housing box (26), and facing an internal surface of a separation wall (33) of non-magnetic material of the housing box (26) ; and a reader (32), which is adapted to read the orientation of the permanent magnet (30), arranged outside the housing box (26), and arranged facing the separation wall (33) of the housing box (26) so as to be close to the permanent magnet (30).

## Description

### TECHNICAL FIELD

The present invention relates to a servo-assisted transmission.

### BACKGROUND ART

Servo-assisted transmissions, which are structurally similar to manual transmissions of the traditional type, except for the fact that the clutch pedal and the gear selection lever traditionally operated by the driver are replaced by corresponding electric or hydraulic servo-controls, are increasingly widespread. When using a servo-assisted transmission, the driver only needs to send the order to shift up or down to a transmission control unit and the transmission control unit autonomously shifts gear by operating both on the engine and on the servo-controls associated to clutch and gearbox.

Generally, the clutch servo-control is of the hydraulic type and acts on an axially movable part of the clutch to displace the axially movable part of the clutch with respect to an axially fixed part of the clutch so as to vary the interaction between the two parts and thus to vary the drive torque transmitted by the clutch. The servo-control of the clutch is driven in feedback in order to ensure an adequate accuracy in controlling the position of the clutch; accordingly, the servo-control of the clutch comprises a position sensor which detects the exact axial position of the axially movable part of the clutch in real time. Usually, the position sensor of the clutch is of the rotating type and is not directly connected to the axially movable part of the clutch, but is connected to a mechanical transmission device which receives the motion from the axially movable part of the clutch; the mechanical transmission device serves the two-fold function of forming a mechanical transmission outwards (in this manner, the angular position sensor may be positioned at a housing box of the servo-assisted transmission) and of transforming the linear movement of the axially movable part of the clutch into a corresponding rotary movement.

Generally, the gearbox servo-control is of the hydraulic type and acts on a control shaft of the gearbox to impress both an axial displacement to the control shaft (i.e. along a longitudinal axis) to select the gear range, and a rotation about the longitudinal axis to engage and disengage each gear. Accordingly, the gearbox servo-control comprises a linear actuator of the hydraulic type mechanically coupled to the control shaft to axially displace the control shaft, and a rotating actuator of the hydraulic type mechanically coupled to the control shaft to rotate the control shaft. The gearbox servo-control is driven in feedback in order to ensure an appropriate accuracy in controlling the position of the control shaft in the gearbox; accordingly, the gearbox servo-control comprises a linear position sensor which detects the exact axial position of the control shaft of the gearbox along the longitudinal axis in real time, and an angular position sensor which detects the exact angular position of the control shaft of the gearbox about the longitudinal axis in real time.

Usually, the linear position sensor is of the rotating type and is not directly connected to the control shaft of the gearbox, but is connected to a first mechanical transmission device, which receives the motion from the gearbox control shaft; the first mechanical transmission device serves the two-fold function of forming a mechanical transmission outwards (in this manner, the angular position sensor may be positioned at a housing box of the servo-assisted transmission) and of transforming the linear movement of gearbox control shaft into a corresponding rotary movement. The angular position sensor is also of the rotating type and is not directly connected to the control shaft of the gearbox, but is connected to a second mechanical transmission device, which receives the motion from the gearbox control shaft; the second transmission device serves the function of forming a mechanical transmission outwards (in this manner, the angular position sensor may be positioned at a housing box of the servo-assisted transmission).

In the currently marketed servo-assisted transmissions, the three position sensors (clutch position sensor, linear gearbox position sensor and angular gearbox position sensor) are of the potentiometric type and comprise a fixed part which is connected to the housing box of the servo-assisted transmission and carries an angular potentiometer, and a movable part which is mechanically secured to the fixed part, is fixed to an output of the corresponding transmission device and moves a cursor of the potentiometer. Generally, the fixed part of the position sensor is arranged outside the housing box of the servo-assisted transmission, while the movable part of the position sensor is arranged inside the housing box of the servo-assisted transmission; in this manner, the fixed part of the position sensor, which carries all the electric connections, is not involved by the lubricant oil and the control oil of the hydraulic actuators inside the housing box of the servo-assisted transmission.

However, using the position sensors of the potentiometric type displays some drawbacks. Firstly, a mechanical connection being provided between the fixed part of the position sensor and the movable part of the position sensor, making a specific through hole through the housing box of the servo-assisted transmission is required; such a through hole must be appropriately sealed by means of appropriate insulating seals, and thus making such a through hole is rather expensive and complex and there is always a potential risk of oil seeping outwards. Furthermore, the position sensors of the potentiometric type are susceptible of an inevitable mechanical wear which causes a slow, but inevitable time drift of the position sensor readings; therefore, the transmission control unit must periodically recalibrate the position sensors in order to compensate for time drifts in the position sensor readings.

### DISCLOSURE OF INVENTION

It is the object of the present invention to provide a servo-assisted transmission which is free from the above-described drawbacks, and specifically which is easy and cost-effective to be made.

According to the present invention a servo-assisted transmission is provided as claimed in the appended claims.

### BRIEF DESCRIPTION OF THE DRAWINGS

The present invention will now be described with reference to the accompanying drawings, which show a non-limitative embodiment thereof, in which:
- figure 1 is a diagrammatic view of a servo-assisted transmission made according to the present invention;
- figure 2 is a diagrammatic perspective view with parts removed for clarity of a portion of the servo-assisted transmission in figure 1;
- figure 3 is a perspective, exploded and diagrammatic view of a fixed part of a position sensor of the servo-assisted transmission in figure 1; and
- figure 4 is a diagrammatic side view with parts removed for clarity of a position sensor of the servo-assisted transmission in figure 1.

### PREFERRED EMBODIMENTS OF THE INVENTION

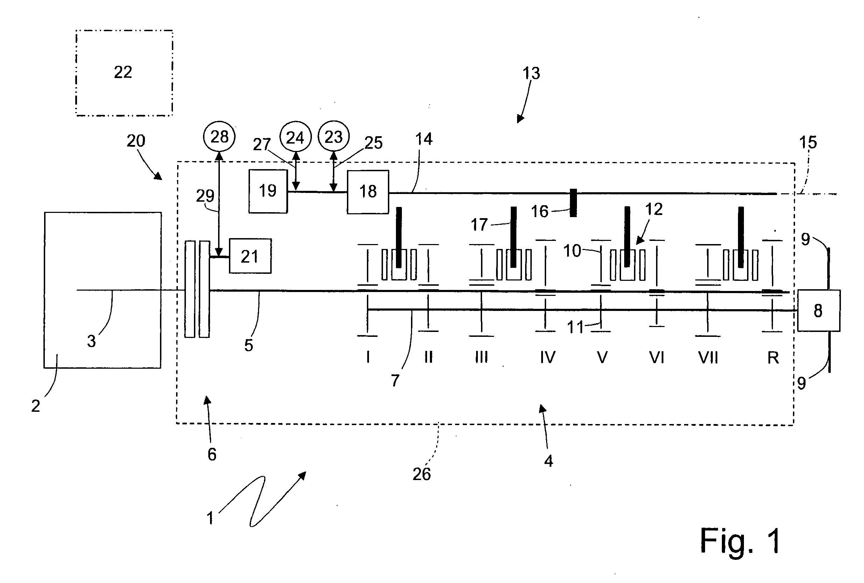

In figure 1, numeral 1 indicates a whole a servo-assisted transmission for a car (not shown) propelled by an internal combustion engine 2, which is provided with a drive shaft 3.

The servo-assisted transmission 1 comprises a servo-assisted gearbox 4, which is provided with a primary shaft 5, which is connectable to the drive shaft 3 by means of a servo-assisted clutch 6, and with a secondary shaft 7, which is connected to a differential 8, which transmits the motion to the drive wheels of the car (not shown) by means of two axle shafts 9.

The servo-assisted gearbox 4 shown in the accompanying figure displays seven forward speeds indicated by Roman numerals (first speed I, second speed II, third speed III, fourth speed IV, fifth speed V, sixth speed VI and seventh speed VII) and one reverse gear (indicated by the letter R). The primary shaft 5 and the secondary shaft 7 are reciprocally and mechanically coupled by means of a plurality of gear pairs, each of which defines a corresponding speed and comprises a primary gear 10 mounted on the primary shaft 5 and a secondary gear 11 mounted on the secondary shaft 7.

Each primary gear 10 is idly mounted on the primary shaft 5 and always meshes with the corresponding secondary gear 11; instead, each secondary gear 11 is keyed onto the secondary shaft 7 to integrally rotate with the secondary shaft 7 . Furthermore, the servo-assisted gearbox 4 comprises four synchronizers 12, each of which is coaxially mounted to the primary shaft 5, is arranged between two primary gears 10, and is adapted to be actuated to alternatively engage the two corresponding primary gears 10 to the primary shaft 5 (i.e. to alternatively make the two corresponding primary gears 10 angularly integral with the primary shaft 5). In other words, each synchronizer 12 may be displaced either in one direction to engage a primary gear 10 to the primary shaft 5, or may be displaced in the other direction to engage the other primary gear 10 to the primary shaft 5.

The servo-assisted gearbox 4 comprises a hydraulic servo-control 13, which is adapted to actuate the synchronizers 12 for engaging and disengaging the gears. The hydraulic servo-control 13 comprises a control shaft 14 which is mounted in a movable manner to be axially displaced, i.e. along a longitudinal axis 15, and to rotate about the longitudinal axis 15; the axial displacement movement of the control shaft 14 allows to select the gear range, while the rotary movement of the control shaft 14 allows to engage and disengage the gears. Specifically, the control shaft 14 is provided with a finger 16, which is keyed onto the control shaft and is adapted to act on a series of forks 17, each of which is mechanically connected to a corresponding synchronizer 12 to axially displace the synchronizer 12 so as to engage/disengage the gears associated to the synchronizer 12 . By axially displacing the control shaft 14, the finger 16 is aligned with the various forks 17 and therefore the gear range is selected; on the other hand, by rotating the control shaft 14, the fork 17 is displaced and correctly aligned with the finger 16 and thus a speed is either engaged or disengaged. The hydraulic servo-control 13 comprises a hydraulic linear actuator 18 mechanically coupled to the control shaft 14 to axially displace the control shaft 14 along the longitudinal axis 15, and a hydraulic rotating actuator 19 mechanically coupled to the control shaft 19 to rotate the control shaft 2 about the longitudinal axis 15.

The servo-assisted clutch 6 comprises a hydraulic servo-control 20, which is adapted to drive the servo-assisted clutch 6 to connect and disconnect the drive shaft 3 of the internal combustion engine 2 to/from the primary shaft 5 of the servo-assisted gearbox 4. The hydraulic servo-control 20 comprises a hydraulic linear actuator 21 which acts on an axially movable part of the servo assisted clutch 6 to displace the axially movable part of the servo-assisted clutch 6 with respect to an axially fixed part of the servo-assisted clutch 6 so as to vary the interaction between the two parts and thus to vary the drive torque transmitted by the servo-assisted clutch 6.

The servo-assisted transmission 1 comprises a control unit 22, which supervises the operation of the servo-assisted transmission 1 by driving the hydraulic servo-control 13 of the servo-assisted gearbox 4 (i.e. the hydraulic actuators 18 and 19) and the hydraulic servo-control 20 of the servo assisted clutch 6 (i.e. the hydraulic actuator 21). In order to ensure an adequate driving accuracy, the control unit 22 drives the hydraulic servo-controls 13 and 20 in feedback; accordingly, the control unit 22 must know in real time the actual axial position of the axially movable part of the servo-assisted clutch 6, the actual axial position along the longitudinal axis 15 of the control shaft 14 of the servo-assisted gearbox 4, and the actual angular position about the longitudinal axis 15 of the control shaft 14 of the servo-assisted gearbox 4.

The hydraulic servo-control 13 in the servo-assisted gearbox 4 comprises an angular position sensor 23 which reads the angular position about the longitudinal axis 15 of the control shaft 14 of the servo-assisted gearbox 4 and a linear position sensor 24 which reads the axial position along the longitudinal axis 15 of the control shaft 14 of the servo-assisted gearbox 4. The angular position sensor 23 is of the rotating type and is not directly connected to the control shaft 14 of the servo-assisted gearbox 4, but is connected to a mechanical transmission device 25, which serves the function of forming a mechanical transmission outwards. In other words, the angular position sensor 23 receives the motion from the control shaft 14 by means of the mechanical transmission device 25; in this manner, the angular position sensor 23 may be positioned at a metal housing box 26 of the servo-assisted transmission 1. The linear position sensor 24 is of the rotating type and is not directly connected to the control shaft 14 of the servo-assisted gearbox 4, but is connected to a mechanical transmission device 27, which serves the two-fold function of forming a mechanical transmission outwards and transforming the linear movement of the control shaft 14 into a corresponding rotary movement. In other words, the linear position sensor 24 receives the motion from the control shaft 14 by means of the mechanical transmission device 27; in this manner, the linear position sensor 24 may be positioned at the metal housing box 26 of the servo-assisted transmission 1.

The hydraulic servo-control 20 of the servo-assisted clutch 6 comprises a linear position sensor 28 which reads the axial position of the axially movable part of the servo-assisted clutch 6. The linear position sensor 28 is of the rotating type and is not directly connected to the axially movable part of the servo-assisted clutch 6, but is connected to a mechanical transmission device 29, which serves the two-fold function of forming a mechanical transmission outwards and transforming the linear movement of the axially movable part of the servo-assisted clutch 6 into a corresponding rotary movement. In other words, the linear position sensor 28 receives the motion from the axially movable part of the servo-assisted clutch 6 by means of the mechanical transmission device 29; in this manner, the linear position sensor 28 may be positioned at a metal housing box 26 of the servo-assisted transmission 1.

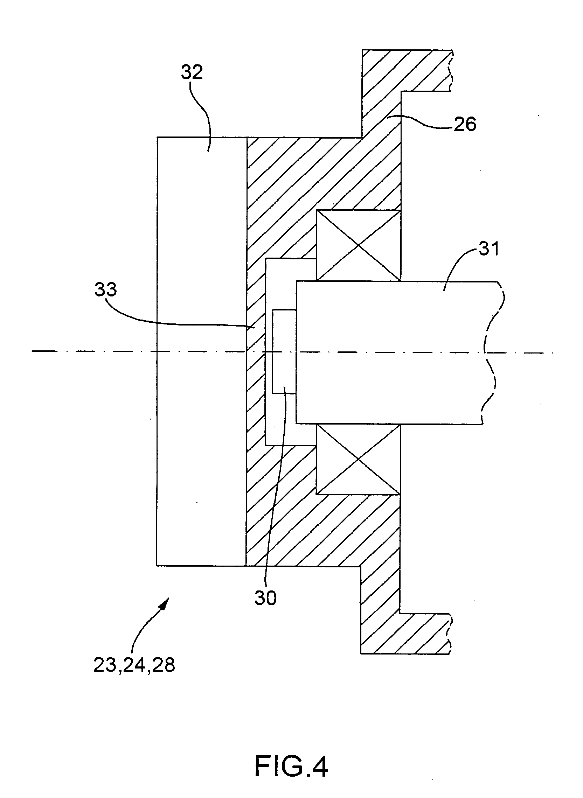

As shown in figure 4, each position sensor 23, 24 or 28 is of the contactless type and comprises a permanent magnet 30 fixed to a movable (rotating) part 31 of the corresponding transmission device 25, 27 or 29 and a fixed reader 32, which is of the magnetic type (e.g. magneto-resistive), is adapted to read the orientation of the permanent magnet 30 and is firmly connected to the housing box 26 of the servo-assisted transmission 1. The fixed reader 32 is arranged outside the housing box 26, while the permanent magnet 30 is arranged inside the housing box 26; therefore, the housing box 26 comprises a separation wall 33, which physically separates the permanent magnet 30 from the reader 32 maintaining the permanent magnet 30 completely insulated from the reader 32. In other words, the reader 32 is arranged facing an external surface of the separation wall 33, while the permanent magnet 30 is arranged facing an internal surface of the separation wall 33.

According to a possible embodiment, the permanent magnet 30 of each position sensor 23, 24 or 28 is embedded in the movable (rotating) part 31 of the corresponding device 25, 27 or 29 and is for example comolded with the movable (rotating) part 31 .

As shown in figure 4, at the separation wall 33, the housing box 26 displays a reduced thickness for reducing the distance existing between the permanent magnet 30 and the reader 32. In other words, the housing box 26 displays a given thickness to be able to withstand the mechanical stresses to which it is subjected; at the separation wall 33, the housing box 26 displays a localized reduction of the thickness to contain the distance existing between the permanent magnet 30 and the reader 32.

It is worth noting that at least the separation wall 33 must consist of non-magnetic material to allow the reader 32 to determine the orientation of the permanent magnet 30. Accordingly, either the whole housing box 26 consists of a non-magnetic material (e.g. aluminium or plastic material), or the separation wall 33 only consists of a non-magnetic material (e.g. aluminium or plastic material) while the remaining part of the housing box 26 consists of magnetic material (e.g. steel).

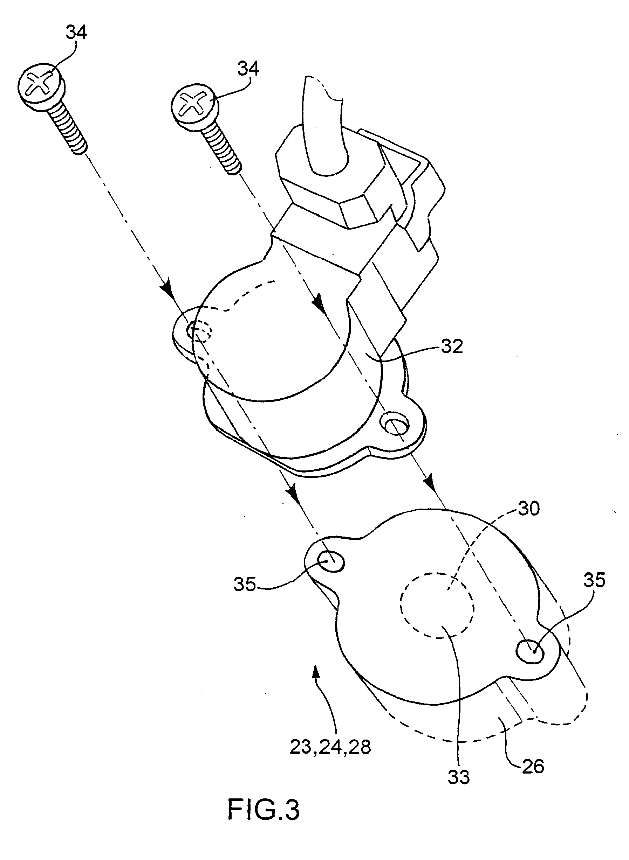

As shown in figure 3, each reader 32 is fixed outside the housing box 26 by means of two screws 34 which are screwed in corresponding blind threaded holes 35 obtained through the housing box 26 .

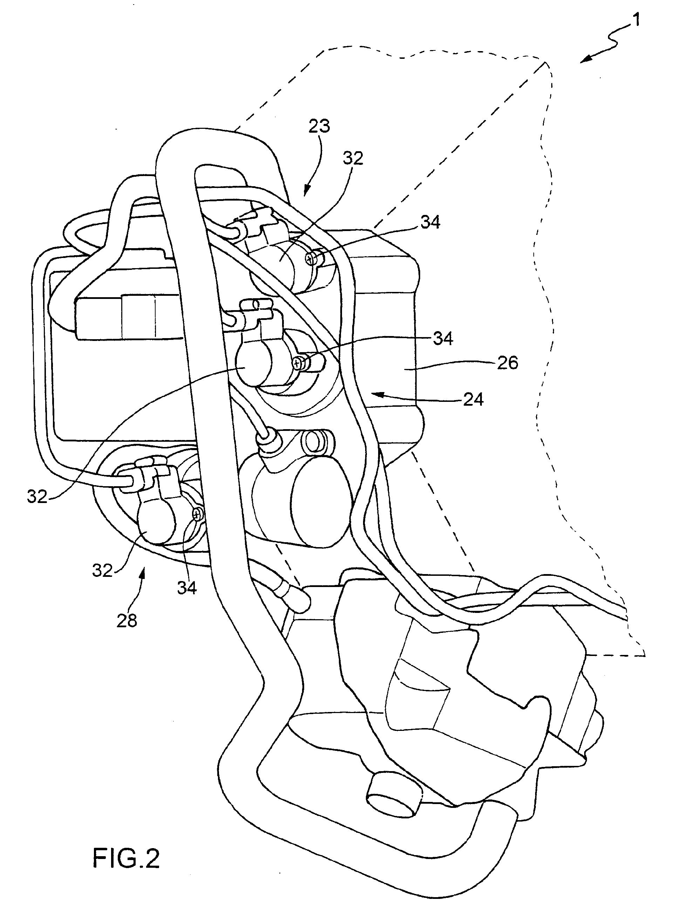

Figure 2 shows an overview of a part of the housing box 26 which shows the arrangement of the three position sensors 23, 24 and 28; figure 2 is an external view of the housing box 26, therefore in figure 2 only the readers 32 of the three position sensors 23, 24 and 28 may be seen.

The above-described conformation of the three position sensors 23, 24 and 28 displays several advantages. Firstly, the readers 32 are insulated from the corresponding permanent magnets 30 by means of the corresponding separation walls 33; therefore, at the position sensors 23, 24 and 28, the housing box 26 of the servo-assisted transmission 1 does not display any through hole and using insulating seals is thus not required. In this manner, assembling the position sensors 23, 24 and 28 is very simple and cost-effective and does not display any problem of oil seeping outwards.

Furthermore, the position sensors 23, 24 and 28 are contactless and therefore the readers 32 do not display any moving part; accordingly, the position sensors 23, 24 and 28 are free from time drifts and therefore maintain their reading features unchanged over the course of time. Therefore, it is not needed to periodically recalibrate the position sensors 23, 24 and 28 to compensate for time drifts in the readings by the positions sensors 23, 24 and 28 themselves.

Assembling the readers 32 of the position sensors 23, 24 and 28 is easy and fast because the readers 32 are arranged outside the housing box 26 of the servo-assisted transmission 1; therefore, it is simple and immediate to perform check, maintenance or replacement operations of the readers 32 even when the servo-assisted transmission 1 is mounted on a vehicle. With this regard, it is worth noting that the whole electronics of the position sensors 23, 24 and 28 (i.e. the whole part potentially susceptible of faults) is accommodated in the readers 32, while the permanent magnets 30 are passive, physical, monolithic components which do not display the possibility of faults or malfunctions during normal use.

Finally, the above-described position sensors 23, 24 and 28 do not introduce any type of friction on the movable (rotating) parts 31 of the transmission devices 25, 27 and 29 because the readers 32 are of the contactless type and thus are mechanically independent from the permanent magnets 30 (therefore no dynamic or static sealing ring needs to be coupled to the rotating parts 31 of the transmission devices 25, 27 and 29).

## Claims

1. A servo-assisted transmission (1) comprising:
at least one servo-assisted clutch (6);
a servo-assisted gearbox (4);
a clutch servo-control (20) provided with an actuator (21) for driving the servo-assisted clutch (6);
a gearbox servo-control (13) provided with at least one actuator (18; 19) for driving the servo-assisted gearbox (4);
a housing box (26); and
at least one position sensor (23; 24; 28) for detecting the position of a movable part (31) arranged inside the housing box (26);
the servo-assisted transmission (1) is **characterized in that** the position sensor (23; 24; 28) comprises:
a permanent magnet (30), which is fixed onto the movable part (31), arranged within the housing box (26), and facing an internal surface of a separation wall (33) of non-magnetic material of the housing box (26) ; and
a reader (32), which is adapted to read the orientation of the permanent magnet (30), arranged outside the housing box (26), and arranged facing the separation wall (33) of the housing box (26) so as to be close to the permanent magnet (30).

2. A servo-assisted transmission (1) according to claim 1, wherein the reader (32) of the position sensor (23; 24; 28) is of the magnetic type.

3. A servo-assisted transmission (1) according to claim 1 or 2, wherein the permanent magnet (30) of the position sensor (23; 24; 28) is embedded in the movable part (31).

4. A servo-assisted transmission (1) according to claim 1, 2 or 3 and comprising:
a first angular position sensor (23) which reads the angular position about a longitudinal axis (15) of a control shaft (14) of the servo-assisted gearbox (4);
a second linear position sensor (24) which reads the axial position about the longitudinal axis (15) of the control shaft (14) of the servo-assisted gearbox (4); and
a third linear position sensor (128) which reads the axial position of an axial movable part of the servo-assisted clutch (6).

5. A servo-assisted transmission (1) according to claim 4 and comprising:
a first mechanical transmission device (25), which transmits the motion from the control shaft (14) of the servo-assisted gearbox (4) to the first angular position sensor (23) and comprises the movable part (31) coupled to the first angular position sensor (23) ;
a second mechanical transmission device (27), which transmits the motion from the control shaft (14) of the servo-assisted gearbox (4) to the second linear position sensor (24) and comprises the movable part (31) coupled to the second linear position sensor (24) ; and
a third mechanical transmission device (29), which transmits the motion from the axially movable part of the servo-assisted clutch (6) to the third linear position sensor (28) and comprises the movable part (31) coupled to the third linear position sensor (28) .

6. A servo-assisted transmission (1) according to claim 5, wherein:
all the position sensors (23, 24, 28) are of the rotating type;
the second mechanical transmission device (27) transforms the linear movement of the control shaft (14) into a corresponding rotary movement; and
the third transmission device (29) transforms the linear movement of the axially movable part of the servo-assisted clutch (6) into a corresponding rotary movement.

7. A servo-assisted transmission (1) according to any one of the claims from 1 to 6, wherein at the separation wall (33) the housing box (26) displays a reduced thickness to reduce the distance existing between the permanent magnet (30) and the reader (32).

8. A servo-assisted transmission (1) according to any one of the claims from 1 to 7, wherein the reader (32) is externally fixed to the housing box (26) by means of a number of screws (34) which are screwed into corresponding threaded holes (35) obtained through the housing box (26) .

9. A servo-assisted transmission (1) according to any one of the claims from 1 to 8, wherein the gearbox servo-control (13) comprises a linear actuator (18) mechanically coupled to the control shaft (14) to axially displace the control shaft (14) along the longitudinal axis (15), and a rotating actuator (19) mechanically coupled to the control shaft (19) to rotate the control shaft (2) about the longitudinal axis (15).
